# EUROPEAN PATENT SPECIFICATION

(11) **EP 1 155 286 B1**
(45) Date of publication and mention of the grant of the patent: **09.04.2008**
(21) Application number: 00917655.3
(22) Date of filing: 21.02.2000
(51) Int. Cl.: G01C 22/02

(54) **VEHICLE SPEED SENSOR FOR NAVIGATION SYSTEM**
FAHRZEUGGESCHWINDIGKEITSSENSOR FÜR NAVIGATIONSSYSTEM
DETECTEUR DE VITESSE DE VEHICULE POUR SYSTEME DE NAVIGATION

(30) Priority: 22.02.1999 US 120931 P
(43) Date of publication of application: 21.11.2001
(73) Proprietor: Magellan Navigation, Inc., Dover, Delaware 19901 (US)
(72) Inventor: BEGIN, John, D., Sterling Heights, MI 48314 (US)
(74) Representative: Shanks, Andrew
(86) International application number: PCT/US2000/004418
(87) International publication number: WO 2000/050846

(56) References cited:
- GB-A- 2 242 527
- US-A- 5 524 034
- US-A- 5 673 018
- US-A- 5 828 585

## Description

### BACKGROUND OF THE INVENTION

The present invention relates generally to a vehicle speed sensor for use in a navigation or dead reckoning system.

Many vehicle navigation or route-guidance systems utilize "dead-reckoning" to propagate the position of the vehicle, usually in combination with other sensors and known techniques, such as a GPS receiver, map-matching, etc. For dead-reckoning, generally the displacement or speed of the vehicle is measured, as is the vehicle's heading. By determining the displacement of the vehicle in a determined heading, the position of the vehicle is propagated, typically relative to a database of roads.

The speed and/or displacement of the vehicle is currently obtained directly from the vehicle's electrical and control systems. Since vehicles' electrical control systems are not standardized, it is often costly or inconvenient to connect to these systems when installing a navigation system in the vehicle. Moreover, some manufacturers are eliminating the availability of speed information to "third party" electronic systems.

US-A-5,524,034 relates to an automatic revolution counting and data transmission device for measuring full or partial revolutions of a shaft, processing, storing, and transmitting said revolutions and related data. US-A-5,524,034 however does not relate to a vehicle navigation system.

US-A-5,828,585 relates to a system and method of automatically calibrating a vehicle speed sensor signal to provide an accurate speed signal for use in vehicle systems such as a navigation system. However, US-A-5,828,585 uses "dead-reckoning" and GPS to determine the speed of a vehicle. There is also no disclosure of a navigation system comprising a wireless system to determine vehicle displacement.

US-A-5,673,018 relates to a transponder system for reporting the distance travelled by a wheeled vehicle. An' RF transponder transmits information on the distance travelled by a wheeled vehicle in response to an interrogation signal from an exciter/receiver. However, US-A-5,673,018 does not relate to a navigation system.

GB 2242527 A relates to a revolution counting system comprising a counter unit fixed to a hub of a trailer wheel and a reader unit. However, GB 2242527 A does not relate to a navigation system.

### SUMMARY OF THE INVENTION

According to a first aspect of the present invention there is provided a navigation system comprising:
position and motion determining devices;
a CPU;
a display; and
a speed sensor;
said speed sensor comprising:
   a wireless transmitter generating a wireless signal indicative of a vehicle displacement and adapted to be mounted to a rotating part of the vehicle; and
   a wireless receiver adapted to receive said wireless signal from said transmitter and connected to the CPU,
wherein said navigation system uses the wireless signals to determine the position of the vehicle.

According to a second aspect of the present invention there is provided a navigational method using a navigation system according to the first aspect and comprising the steps of:
generating a wireless signal indicative of rotational displacement of a vehicle part;
receiving said wireless signal;
wherein said navigation system uses the wireless signals to determine the position of the vehicle.

The present invention provides a vehicle speed sensing system which can be installed easily in any vehicle to provide displacement and speed information to the navigation system. The speed sensing system generally comprises a remote unit fixed on a part of the vehicle which rotates proportionately to displacement of the vehicle. A receiving unit is affixed to the vehicle and receives a signal from the remote unit indicative of the rotation of displacement of the rotating vehicle part. The displacement of the vehicle is proportional to the rotational displacement of the vehicle part.

Preferably, the remote unit counts the rotations of the vehicle part. In one embodiment, a transmitter in the remote unit sends a "beacon" signal upon each one or one-half rotations of the vehicle part. The relationship of rotation of the vehicle part to vehicle displacement is determined by comparing rotations of the vehicle part with other measured or computed displacements of the vehicle, as determined from the other sensors and/or comparison to a map database.

In one embodiment, the remote unit is secured to the air pressure valve stem of the vehicle wheel. The remote unit includes its own power source which generates power from the rotational energy.

### BRIEF DESCRIPTION OF THE DRAWINGS

The above, as well as other advantages of the present invention, will become readily apparent to those skilled in the art from the following detailed description of a preferred embodiment when considered in the light of the accompanying drawings in which:
Figure 1 is a schematic of the navigation system for the present invention.
Figure 2 is an enlarged, partially exploded view of the remote unit of the vehicle speed sensor of Figure 1.
Figure 3 is a more detailed schematic of the remote unit and receiving unit of the vehicle speed sensor of Figure 1.
Figure 4 illustrates one embodiment of the vehicle speed sensor of Figure 3.
Figure 5 is a schematic of a second embodiment of the vehicle speed sensor of Figure 3.
Figure 6 is a schematic of a third embodiment of the vehicle speed sensor of Figure 3.

### DETAILED DESCRIPTION OF THE PREFERRED EMBODIMENT

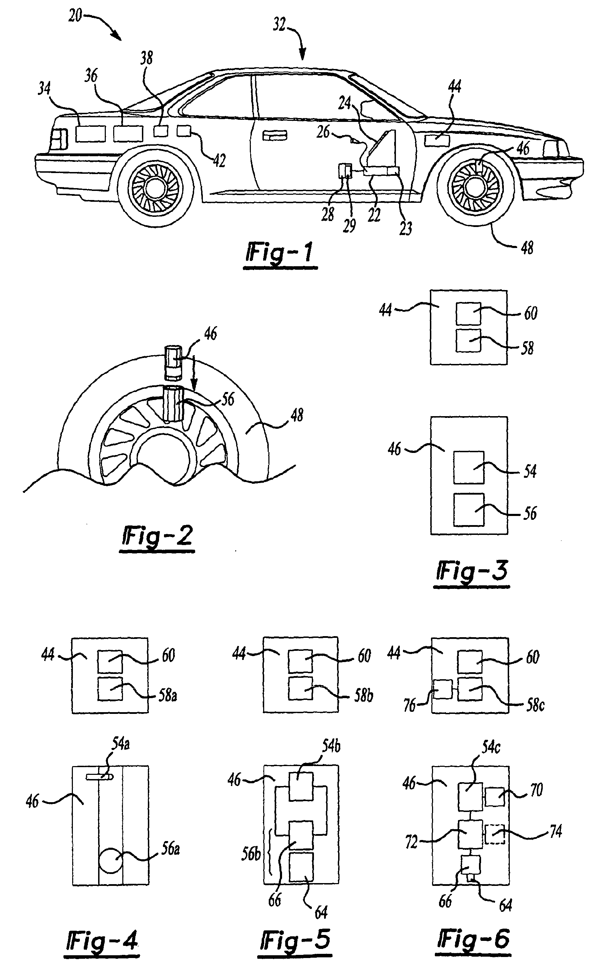

The navigation system 20 of the present invention is shown schematically in Figure 1. The navigation system 20 includes a CPU 22 having RAM 23 and connected to a display 24, such as a high resolution LCD or flat panel display. The CPU 22 is also connected to an input device 26 such as a mouse, keyboard, key pad, remote device or microphone. Alternatively, the display 24 can be a touch screen display. The navigation system 20 further includes a storage device 28, such as a hard drive 28 or CD ROM, connected to the CPU 22. The storage device 28 contains a database 29 including a map of all the roads in the area to be traveled by the vehicle 32 as well as the locations of potential destinations, such as addresses, hotels, restaurants, and may contain the software for the CPU 22, including the graphical user interface, route guidance, operating system, position-determining software, etc.

The navigation system 20 preferably includes position and motion determining devices, such as a GPS receiver 34, a gyroscope 36, a compass 38, and a multi-axis accelerometer 42, all connected to the CPU 22 (connections not shown for simplicity). Such position and motion determining devices are well known and are commercially available. The navigation system 20 further includes a speed sensor 44, 46, which will be explained in more detail with reference to the other figures.

As is well known, the position and motion determining devices determine the position of the vehicle 32 relative to the database of roads. Further, as is known in navigation systems, the user can select a destination relative to the database of roads utilizing the input device 26 and the display 24. The navigation system 20 then calculates and displays a recommended route directing the driver of the vehicle 32 to the desired destination. Preferably, the navigation system 20 displays tum-by-tum instructions on display 24, guiding the driver to the desired destination.

The vehicle speed sensor 44, 46 comprises a receiving unit 44 and a remote unit 46. The remote unit 46 is secured to a wheel 48 of the vehicle 32. Generally, the remote unit 46 generates a signal indicative of the rotational displacement of the wheel 48. The receiving unit 44 receives the signal from the remote unit 46 and relays the signal to the CPU 22. Preferably, the remote unit 46 generates a "beacon" signal one time for every revolution of the wheel 48. In another embodiment, the remote unit 46 counts revolutions of the wheel 48 and periodically sends an intelligent signal indicating the number of revolutions. The number of revolutions of the wheel 48 will be proportional to the displacement of the vehicle 32.

Speed of the vehicle 32 is derived from the displacement over a given time period. The CPU 22 (with the necessary software) calibrates the vehicle speed sensor 44, 46 automatically. Preferably, the CPU 22 determines the mathematical relationship between revolutions by wheel 48 (or beacon signals from remote unit 46) and vehicle displacement. The CPU 22 determines this relationship by comparing the number of revolutions of wheel 48 (or beacon signals) with distances as determined by any or a combination of other sensors or techniques, such as the GPS receiver 34, the accelerometer 42 and map-matching with database 29.

Once the relationship of signals from remote unit 46 and vehicle speed is determined, vehicle speed from the vehicle speed sensor 44, 46 is utilized by the CPU 22 in propagating position of the vehicle 32 by dead-reckoning, utilizing known techniques. Since the vehicle speed sensor 44, 46 is calibrated after installation onto the vehicle 32, there is no need to provide any information to the CPU 22 regarding the type of vehicle 32 onto which the vehicle speed sensor 44, 46 is installed.

The remote unit 46 may be secured to the vehicle wheel 48 as shown in Figure 2. The remote unit 46 is secured to the valve stem 50 of the wheel 48. The remote unit 46 includes an internally threaded inner end which is threaded onto the externally threaded outer end of valve stem 50, replacing the typical valve stem cap.

Figure 3 is a high-level schematic of the receiving unit 44 and remote unit 46. Generally, the remote unit 46 includes a transmitter 54 and a power source 56. The receiving unit 44 includes a receiver 58, complementary to the transmitter 54. The receiving unit 54 further includes circuitry 60 for relaying the information from the receiver 58 to the CPU 22 (Figure 1).

Figure 4 illustrates one embodiment implementing the schematic of Figure 3. In Figure 4, the remote unit 46 includes a power source 56 which is simply a mass 56a moveable within a housing of remote unit 46. The transmitter 54 of remote unit 46 is a tuning fork 54a. The receiving unit 44 includes a receiver 58a which is generally a microphone and high-Q tuned receiver, tuned to receive the frequency of tuning fork 54a. In this embodiment, the remote unit 46 must be mounted near the center of the rotating wheel 48. The mass 56a, preferably a steel ball, falls towards the center of the earth and strikes the tuning fork 54a once per revolution of wheel 48. The frequency emitted from tuning fork 54a is detected by the receiver 58a and the circuitry 60 indicates to the CPU 22 (Figure 1) that one revolution of wheel 48 has occurred.

Figure 5 illustrates a second embodiment wherein the power source 56b comprises a mass 64 secured to a piezo generator 66. The piezo generator 66 is connected to a resonant LC tank circuit 54b. During each revolution, the mass 64 moves a distance with force and generates electrical charge to cause the resonant LC tank circuit 54b to generate a short RF burst. The receiver 58b is tuned to the frequency of the resonant LC tank circuit 54b. The circuitry 60 sends a signal to the CPU 22 (Figure 1) each time the RF burst is received from the remote unit 46, indicating one revolution of the wheel 48.

Figure 6 illustrates a third embodiment of the wheel speed sensor of Figure 3. The remote unit 46 again includes the piezo generator 66 and mass 64 which senses the revolutions of the wheel 48. The piezo generator 66 is connected to circuitry 72 which detects the change in force that the mass 64 exerts on the piezo generator 66 during revolution from positive 1G to negative 1G. The transmitter 54C is preferably an RF transmitter powered by a battery 70. The transmitter 54C may send an RF burst or "beacon" signal once or twice per revolution of the wheel 48.

More preferably, the circuitry 72 accumulates a plurality of revolutions, preferably between 10 to 50, and generates a modulated signal which is sent by the RF transmitter 54C. The complementary RF receiver 58C receives the modulated signal indicating a number of revolutions and a circuitry 60 indicates this number to the CPU 22.

The remote unit 46 optionally includes a receiver 74 which receives an interrogation signal from a transmitter 76 in the receiving unit 44. In this case, the circuitry 72 would accumulate the number of revolutions sensed by the piezo generator 66 until the receiving unit 44 transmits an interrogation signal from transmitter 76 which is received by receiver 74 on the remote unit 46. Upon receiving the interrogation signal, the circuitry 72 modulates the number of revolutions, which is sent via transmitter 54C to the receiver 54C. The remote unit 46 may include a "sleep mode" during which power is conserved, but revolutions are counted. Upon receiving the interrogation signal, the remote unit "wakes up" and transmits the number of revolutions.

Alternatively, transmitter 54C may use modulated backscatter to communicate a modulated signal, such as number of revolutions, to receiving unit 44. Modulated backscatter is generally known to those skilled in the art. Generally, the transmitter 54C includes an antenna that can be resonant or non-resonant at the frequency beam employed. Resonance is switched on and off by a transistor connected across the antenna. Changes in the impedance of the antenna are reflected back to the receiver/transmitter 58C, 76. If modulated backscatter is used, the transmitter 54C may be powered by the battery 70 or may be powered by the signal received from the transmitter 76.

The vehicle speed sensor 44, 46 of the present invention is easy to install into any vehicle 32. Since, the vehicle speed sensor 44, 46 is automatically calibrated by the navigation system 20, there is no need for information regarding the vehicle 32 onto which the vehicle speed sensor 44, 46 is installed.

It should be recognized that a separate microprocessor or other hardware or circuitry could also be used to calibrate the signal from the vehicle speed sensor 44, 46 and/or covert the signal to vehicle speed or displacement information.

In accordance with the provisions of the patent statutes and jurisprudence, exemplary configurations described above are considered to represent a preferred embodiment of the invention.

## Claims

1. A navigation system (20) comprising:
position and motion determining devices;
a CPU (22);
a display; and
a speed sensor;
said speed sensor comprising:
a wireless transmitter (46) generating a wireless signal indicative of a vehicle (32) displacement and adapted to be mounted to a rotating part of the vehicle (32); and
a wireless receiver (44) adapted to receive said wireless signal from said transmitter (46) and connected to the CPU (22),
wherein said navigation system (20) uses the wireless signals to determine the position of the vehicle (32).

2. A navigation system (20) of claim 1, wherein said transmitter (46) is mounted on a wheel (48).

3. A navigation system (20) of claim 1, wherein said transmitter (46) includes a power source (56).

4. A navigation system (20) of claim 3, wherein said power source (56) generates power based upon motion.

5. A navigation system (20) of claim 1, wherein said transmitter (46) generates an acoustic signal.

6. A navigation system (20) of claim 1, wherein said wireless signal is an RF signal.

7. A navigation system (20) of claim 1, wherein said transmitter (46) generates a fixed number of beacon signals upon each revolution of the vehicle part.

8. A navigation system (20) of claim 7, wherein said fixed number is one.

9. A navigation system (20) of claim 1, wherein said wireless signal is a modulated RF signal indicative of said vehicle displacement.

10. A navigation system (20) of claim 1, further including a mass (64) movable relative to said rotating part based upon motion thereof, said wireless signal generated based upon motion of said mass (64).

11. A navigation system (20) of claim 10, wherein said mass (64) is mounted to a piezo-electric (66).

12. A navigation system (20) of claim 1, further including means for calibrating said wireless signal to the determined vehicle displacement.

13. A navigation system (20) of claim 1, further including means for dead-reckoning a position of said vehicle (32) based upon said wireless signal.

14. A navigation system (20) of claim 1, further including a database (29) of roads, said signal indicative of vehicle displacement (32) propagated relative to said database (29) of roads.

15. A navigation system (20) of claim 1, wherein said transmitter (46) for generating a wireless signal counts rotations of a vehicle wheel (48).

16. A navigation system (20) of claim 16, further including means for calibrating rotations of said vehicle wheel (48) to displacement of the vehicle (32).

17. A navigational method using a navigation system (20) as defined in claim 1 and comprising the steps of:
generating a wireless signal indicative of rotational displacement of a vehicle (32) part;
receiving said wireless signal;
wherein said navigation system (20) uses the wireless signals to determine the position of the vehicle (32).

18. A navigational method of claim 18, wherein the step of determining displacement further includes the step of calibrating the wireless signal to the determined vehicle displacement.

19. A navigational method of claim 19, further including the step of dead-reckoning a position of said vehicle (32) based upon said wireless signal.

## Patentansprüche

1. Navigationssystem (20), umfassend:
Positions- und Bewegungsbestimmungsvorrichtungen;
eine ZE (22);
eine Anzeige; und
einen Geschwindigkeitssensor;
der Geschwindigkeitssensor umfassend:
einen drahtlosen Sender (46), der ein drahtloses Signal erzeugt, das eine Verlagerung eines Fahrzeugs (32) anzeigt und angepasst ist, um an ein drehendes Teil des Fahrzeugs (32) montiert zu werden; und
einen drahtlosen Empfänger (44), der angepasst ist, um das drahtlose Signal von dem Sender (46) zu empfangen, und mit der ZE (22) verbunden ist,
wobei das Navigationssystem (20) die drahtlosen Signale verwendet, um die Position des Fahrzeugs (32) zu bestimmen.

2. Navigationssystem (20) nach Anspruch 1, wobei der Sender (46) an einem Rad (48) montiert ist.

3. Navigationssystem (20) nach Anspruch 1, wobei der Sender (46) eine Energiequelle (56) enthält.

4. Navigationssystem (20) nach Anspruch 3, wobei die Energiequelle (56) Energie aufgrund von Bewegung erzeugt.

5. Navigationssystem (20) nach Anspruch 1, wobei der Sender (46) ein akustisches Signal erzeugt.

6. Navigationssystem (20) nach Anspruch 1, wobei das drahtlose Signal ein HF-Signal ist.

7. Navigationssystem (20) nach Anspruch 1, wobei der Sender (46) eine feste Zahl von Bakensignalen nach jeder Umdrehung des Fahrzeugteils erzeugt.

8. Navigationssystem (20) nach Anspruch 7, wobei die feste Zahl eins ist.

9. Navigationssystem (20) nach Anspruch 1, wobei das drahtlose Signal ein moduliertes HF-Signal ist, das die Fahrzeugverlagerung anzeigt.

10. Navigationssystem (20) nach Anspruch 1, weiterhin eine Masse (64) enthaltend, die relativ zu dem drehenden Teil aufgrund von Bewegung davon bewegbar ist, wobei das drahtlose Signal aufgrund von Bewegung der Masse (64) erzeugt wird.

11. Navigationssystem (20) nach Anspruch 10, wobei die Masse (64) an ein Piezoelektrikum (66) montiert ist.

12. Navigationssystem (20) nach Anspruch 1, weiterhin Mittel zum Kalibrieren des drahtlosen Signals auf die bestimmte Fahrzeugverlagerung enthaltend.

13. Navigationssystem (20) nach Anspruch 1, weiterhin Mittel zur Besteckrechnung einer Position des Fahrzeugs (32) aufgrund des drahtlosen Signals enthaltend.

14. Navigationssystem (20) nach Anspruch 1, weiterhin eine Datenbank (29) mit Straßen enthaltend, wobei das Signal, das die Fahrzeugverlagerung (32) anzeigt, sich relativ zu der Datenbank (29) mit Straßen ausbreitet.

15. Navigationssystem (20) nach Anspruch 1, wobei der Sender (46) zur Erzeugung eines drahtlosen Signals Drehungen eines Fahrzeugrads (48) zählt.

16. Navigationssystem (20) nach Anspruch 16, weiterhin Mittel zum Kalibrieren von Drehungen des Fahrzeugrads (48) auf die Verlagerung des Fahrzeugs (32) enthaltend.

17. Navigationsverfahren, das ein Navigationssystem (20), wie in Anspruch 1 definiert, verwendet und die folgenden Schritte umfasst:
Erzeugen eines drahtlosen Signals, das die Drehverlagerung eines Teils eines Fahrzeugs (32) anzeigt;
Empfangen des drahtlosen Signals;
wobei das Navigationssystem (20) die drahtlosen Signale zur Bestimmung der Position des Fahrzeugs (32) verwendet.

18. Navigationsverfahren nach Anspruch 18, wobei der Schritt der Bestimmung der Verlagerung weiterhin den Schritt der Kalibrierung des drahtlosen Signals auf die bestimmte Fahrzeugverlagerung enthält.

19. Navigationsverfahren nach Anspruch 19, weiterhin den Schritt der Besteckrechnung einer Position des Fahrzeugs (32) aufgrund des drahtlosen Signals enthaltend.

## Revendications

1. Système de navigation (20) comprenant:
des dispositifs de détermination de position et de mouvement;
une CPU (22);
un affichage, et
un capteur de vitesse,
ledit capteur de vitesse comprenant:
un émetteur sans fil (46) qui génère un signal sans fil indicatif d'un déplacement de véhicule (32) et adapté pour être monté sur une partie tournante du véhicule (32); et
un récepteur sans fil (44) adapté pour recevoir ledit signal sans fil en provenance dudit émetteur (46) et connecté à la CPU (22),
dans lequel ledit système de navigation (20) utilise les signaux sans fil pour déterminer la position du véhicule (32).

2. Système de navigation (20) selon la revendication 1, dans lequel ledit émetteur (46) est monté sur une roue (48).

3. Système de navigation (20) selon la revendication 1, dans lequel ledit émetteur (46) inclut une source d'alimentation (56).

4. Système de navigation (20) selon la revendication 3, dans lequel ladite source d'alimentation (56) génère de la puissance sur la base d'un mouvement.

5. Système de navigation (20) selon la revendication 1, dans lequel ledit émetteur (46) génère un signal acoustique.

6. Système de navigation (20) selon la revendication 1, dans lequel ledit signal sans fil est un signal RF.

7. Système de navigation (20) selon la revendication 1, dans lequel ledit émetteur (46) génère un nombre fixe de signaux de balise suite à chaque tour de la partie de véhicule.

8. Système de navigation (20) selon la revendication 7, dans lequel ledit nombre fixe est un.

9. Système de navigation (20) selon la revendication 1, dans lequel ledit signal sans fil est un signal RF modulé indicatif dudit déplacement de véhicule.

10. Système de navigation (20) selon la revendication 1, incluant en outre une masse (64) mobile par rapport à ladite partie tournante sur la base de son mouvement, ledit signal sans fil étant généré sur la base du mouvement de ladite masse (64).

11. Système de navigation (20) selon la revendication 10, dans lequel ladite masse (64) est montée sur un élément piézoélectrique (66).

12. Système de navigation (20) selon la revendication 1, incluant en outre un moyen pour étalonner ledit signal sans fil par rapport au déplacement de véhicule déterminé.

13. Système de navigation (20) selon la revendication 1, incluant en outre un moyen pour estimer une position dudit véhicule (32) sur la base dudit signal sans fil.

14. Système de navigation (20) selon la revendication 1, incluant en outre une base de données (29) de routes, ledit signal indicatif du déplacement du véhicule (32) étant propagé en relation avec ladite base de données (29) de routes.

15. Système de navigation (20) selon la revendication 1, dans lequel ledit émetteur (46) pour générer un signal sans fil compte des tours d'une roue de véhicule (48).

16. Système de navigation (20) selon la revendication 16, incluant en outre un moyen pour étalonner des tours de ladite roue de véhicule (48) par rapport à un déplacement du véhicule (32).

17. Procédé de navigation utilisant un système de navigation (20) tel que défini selon la revendication 1 et comprenant les étapes de:
génération d'un signal sans fil indicatif d'un déplacement en rotation d'une partie d'un véhicule (32);
réception dudit signal sans fil,
dans lequel ledit système de navigation (20) utilise les signaux sans fil pour déterminer la position du véhicule (32).

18. Procédé de navigation selon la revendication 18, dans lequel l'étape de détermination de déplacement inclut en outre l'étape d'étalonnage du signal sans fil par rapport au déplacement de véhicule déterminé.

19. Procédé de navigation selon la revendication 19, incluant en outre l'étape d'estimation d'une position dudit véhicule (32) sur la base dudit signal sans fil.
